# EUROPEAN PATENT SPECIFICATION

(11) **EP 2 847 476 B1**
(45) Date of publication and mention of the grant of the patent: **06.09.2017**
(21) Application number: 13788576.0
(22) Date of filing: 08.05.2013
(51) Int. Cl.: F16C 13/00, B65H 23/025, D21F 1/40, D21F 7/02

(54) **CURVED ROLL AND ITS OPERATING ARRANGEMENT**
GEBOGENE WALZE UND DEREN BETRIEBSANORDNUNG
ROULEAU CINTRÉ ET SON AGENCEMENT DE FONCTIONNEMENT

(30) Priority: 10.05.2012 FI 20125502
(43) Date of publication of application: 18.03.2015
(73) Proprietor: Randax OY, 90620 Oulu (FI)
(72) Inventor: RANTAPÄÄ, Matti, 90620 Oulu (FI); HUURINAINEN, Kimmo, 90620 Oulu (FI); SCHÄFER, Timo, 90620 Oulu (FI); HOLAPPA, Kalle, 90620 Oulu (FI)
(74) Representative: Berggren Oy, Helsinki & Oulu
(86) International application number: PCT/FI2013/050508
(87) International publication number: WO 2013/167809

(56) References cited:
- WO-A1-2006/045882
- DE-A1- 10 319 012
- DE-A1- 10 339 733
- DE-A1-102009 059 288
- DE-A1-102009 059 288
- FI-B- 100 350

## Description

The invention relates to an operating arrangement of a curved roll and a curved roll used in the arrangement.

### Prior art

Paper machine rolls are usually operated by a separate motor, which force is conveyed from the operating electric motor to the roll to be rotated via for example an axle, a gear or a belt.

There exists however solutions, where the operating motor is directly connected to the operated roll. Most commonly known are drum motors of various conveyors. Direct drive has increased in paper machines due to the development of permanent magnet motors, but foremost because the rolls rotate with a higher rotation speed due to the increase of speed of the paper machines, and the rotation speed is thus closer to the advantageous operating speed of electric motors than before.

In the known solutions the electric motor is attached outside the frame line of the paper machine, to the axle stub of the rotating roll in the manner of a stub gear or between the frame line and the actual roll. In both cases the motor is supported by the frame of the paper machine or by the bearing cup/articulation bearing arrangement of the roll. In such solutions, the electric motor needs to be equipped with its own bearings and it needs to be resiliently attached to the bearing cup.

The bearing cup or the frame of the paper machine are not, due to the dimensional accuracies of a large machine and deformations during use, a sufficiently precise reference surface for keeping the rotor of the electric motor and the stator in the desired operation position with respect to each other. On the other hand, equipping the electric motor with own bearings in order to achieve sufficient precision leads to the fact that no special advantage can no longer be achieved with respect for example to the standard-type solution, where the electric motor is connected to the frame of the paper machine on the outside of its frame line via a resilient coupling.

A direct drive solution has been described in application publication WO 2009/053520, wherein a direct drive motor is directly connected to the axle of the roll on the outside of the frame of the paper machine. The rotor of the motor is supported by the end bearing of the roll to be rotated and the frame of the stator is supported, by its shell, to the solid floor surface. The disclosed solution requires further, that either the roll to be rotated is close to the floor surface or that a separate support structure extending to the floor surface is built for the frame of the stator.

Also patent US 5 711 221 discloses direct drive solutions suitable for a hollow roll. In the disclosed solutions, the rotating axle stubs of the roll are supported to the frame structure by end bearings. The rotor of the direct drive motor is attached to another axle stub, thus also the rotor of the direct drive motor is supported by the end bearings of the roll. The frame of the stator is attached to the solid frame structures of the machine. The solution disclosed in the patent is suitable for straight rolls that are attached to a firm frame structure.

Furthermore, three direct drive solutions of a hollow roll are disclosed in the application publication EP 1714929. In the solutions of the publication, the direct drive motor is always completely inside the roll in such a manner that the stator is attached to a solid, dead axle inside the roll and the rotor is attached to the outer shell of the roll. The axles disclosed in the publication are supported, at least at one of their ends, by an end bearing.

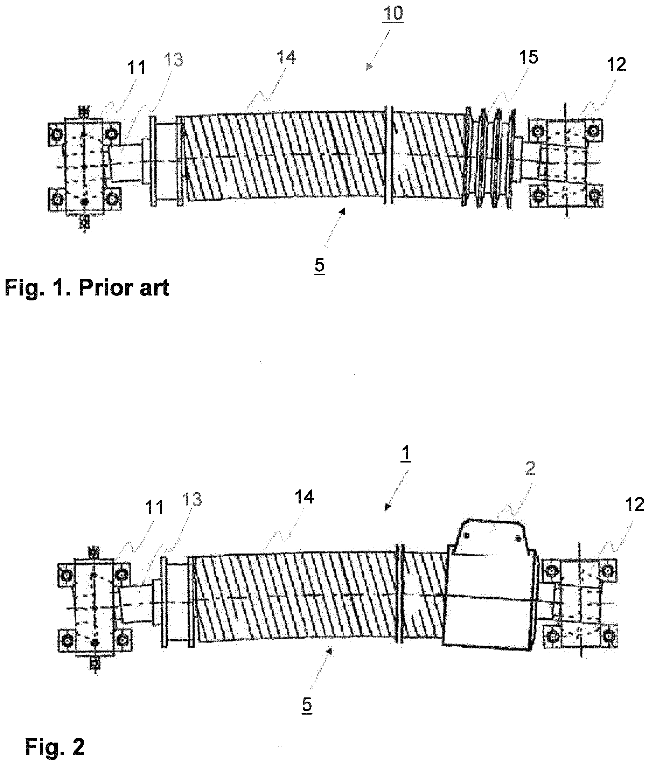

Application publication EP 1920925 discloses one direct drive solution of a roll, in which the rotor does not have own bearings but it is supported by the bearings of the roll (Figure 2). In the disclosed solution, the stator of the direct drive motor is supported to the shell part of the support structure by certain kinds of spring mechanisms.

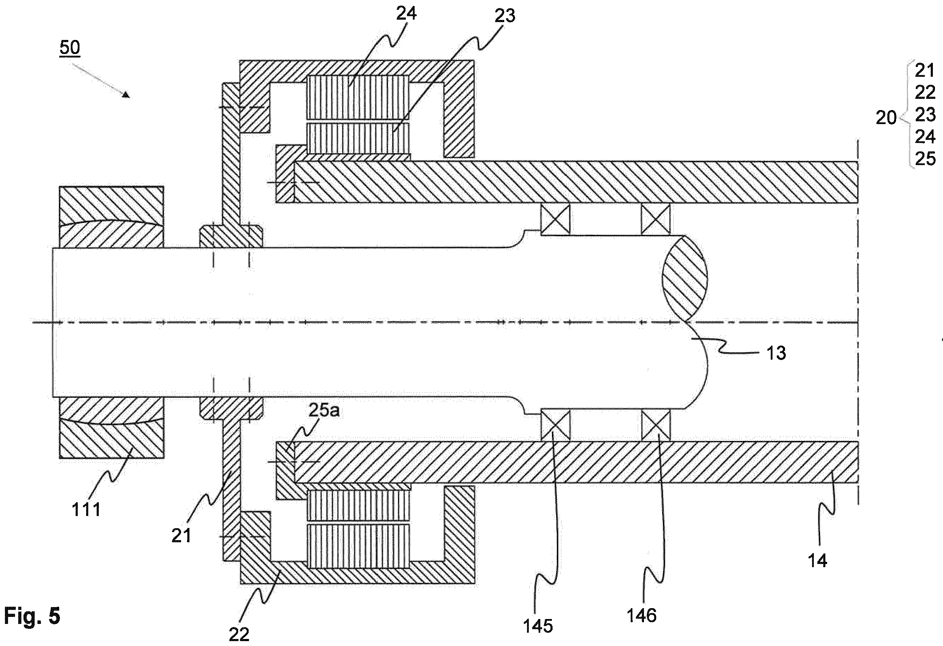

Application publication DE 10 2009 059288 discloses also an electric direct drive motor that is connected to a roll. In one embodiment depicted in Figures 5 and 6 the direct drive motor does not disclose own bearings. Therefore between the stator and rotor of DE 10 2009 059288 there must be a security gap due to the utilized stator mounting method. In a use situation the roll pipe of the roll is bent and the angle between the stator and rotor changes due to the mounting method. The angle due to the bending cannot increase so much that the stator and rotor of the electric direct drive motor make a mechanical contact. Therefore the mechanical attachment method of the depicted direct drive electric motor limits the bending angle the roll pipe of DE 10 2009 059288.

In an application where curved rolls are used, no rotating axle can be lead through the roll. In these applications, the standard-type direct drive solutions described above are not possible. In practice, this problem has been solved by a triangular belt or a toothed belt operation operating the curved roll, which leads to costs and problems relating to maintenance. Curved rolls are used in a paper machine as so-called spreader rolls, by which the paper web is spread in the cross-direction of the path.

**Figure 1** shows one conventional operation solution 10 of curved rolls that is used in a paper machine as a spreader roll. The curved roll 5 comprises a fixed curved and dead axle 13, which is attached at its both ends to the support structures of the machine by articulation bearings 11 and 12. A rotatable roll pipe 14 has been made rotatable by bearings around the curved axle 12. On the drive side of the roll, a driving gear 15 for the belt drive is connected to the end of the roll pipe 14 in a fixed manner. The driving gear 15 is connected via a suitable belt solution to a separate electric motor (not shown in Figure 1),

### Object of the invention

An object of the invention is to present a drive arrangement, as defined according to claim 1. The objects of the invention are achieved by attaching a stator of a direct drive motor to a fixed axle of a curved roll at the drive end of the curved roll and a rotor to a rotating roll pipe of the curved roll. In the solution according to the invention the direct drive motor does not require its own bearings, since the rotor is supported by the bearing between the roll pipe and the axle of the roll. The mutual position and distance between the rotor and the stator are kept constant, which enables the flawless operation of the direct drive motor.
An advantage of the invention is that the support frame of the direct drive motor using the curved roll which support frame supports and holds in place the stator is reliably attachable to the dead axle of the roll.
A further advantage of the invention is that the rotor of the direct drive motor does not require own bearings.

A further advantage of the invention is that there are no wearing parts in the direct drive motor, except a possible v-ring seal, therefore the structure according to the invention reduces the maintenance need of the roll.
A further advantage of the invention is that already existing rolls can be transformed to be operable by direct drive motor by removing belt gearing and by installing a direct drive motor according to the invention at its place.
A further advantage of the invention is that the direct drive motor does not require separate motor beds or supports, nor adjusting means that are required in a typical alignment of a motor based on belt drive.

A further advantage of the invention is that in spreader rolls, in which the angle between the curvature of the roll and the paper web is changed depending on the type of paper, adjustment required in traditional belt driven spreader rolls is avoided, the adjustment which is used for avoiding premature wear of the belts used and for reducing the possibility of slipping of the belts, which disturbs the accuracy of the speed adjustment.
A further advantage of the invention is that the direct drive motor according to the invention is easy to install on the roll and to dismount from the roll at the assembly plant of the roll or at the maintenance site of the roll.
A further advantage of the invention is that when installing the roll to a paper machine or detaching the roll from a paper machine, the direct drive motor does not need to be detached from the roll. The direct drive motor is transported with the roll at all stages and the only installation work relating to the direct drive motor at the paper machine is detachment or attachment of the cables of the direct drive motor.
A further advantage of the invention is that the rotor of a permanently magnetised synchronous machine can be made to rotate as frequency converter controlled without a separate speed sensor, position sensor or combination thereof, precisely at the same speed as the paper web.
A further advantage of the invention is that mechanical losses occurring at various belt drive solutions can be reduced.

The drive arrangement according to the invention uses direct drive electric motor, in which
- a support frame of a stator is attached via an end flange of the stator to a dead axle of the roll
- a rotor is attached by mechanical attachment means to a rotating roll pipe of the roll, and in that
- the bearings of the roll is configured to function also as bearings of the direct drive motor.

Some advantageous embodiments of the invention are presented in the dependent claims.
The basic idea of the invention is the following: A direct drive motor according to the invention is installed on a dead axle of a curved roll between an articulation bearing at the drive end of the roll and at least partly the end surface of the drive end side of the roll pipe, at the location of the gearing necessary for regular belt drive. The direct drive motor can advantageously be a permanently magnetised synchronous motor. The support frame of the stator of the direct drive motor is attached to the dead axle of the roll via the end flange of the stator that is part of the support frame. No other support structure is needed for the stator. The rotor of the direct drive motor is attached, by using mechanical attachment means, to the drive end side end of the roll pipe. A rotor pipe can advantageously be used as mechanical attachment means. The bearings between the roll pipe and the dead axle thus functions then also as the bearing of the rotor of the direct drive motor, whereby no own bearings are needed in the direct drive motor. In the solution according to the invention, the rotation movement of the rotor of the direct drive motor rotates the roll pipe of the curved roll at a same speed.
In the following, the invention will be described in detail. In the description, reference is made to the enclosed drawings, in which
- Figure 1: shows one drive solution of a curved roll according to the state of the art,
- Figure 2: shows, as an example, a direct drive motor according to the invention when installed on a curved roll according to the state of the art,
- Figure 3: shows, as an example, as cross-sectional view a direct drive motor according to a first embodiment of the invention when installed on a dead axle of a curved roll,
- Figure 4: shows, as an example, as cross-sectional view a direct drive motor according to a second embodiment of the invention when installed on a dead axle of a curved roll, and
- Figure 5: shows, as an example, as cross-sectional view a direct drive motor according to a third embodiment of the invention when installed on a dead axle of a curved roll.

The embodiments in the following description are given as examples only and a person skilled in the art can carry out the basic idea of the invention also in some other way than what is described in the description. Though the description may refer to a certain embodiment or embodiments in several places, this does not mean that the reference would be directed towards only one described embodiment or that the described characteristic would be usable only in one described embodiment. The individual characteristics of two or more embodiments may be combined and new embodiments of the invention may thus be provided.

Figure 1 is described in connection with the description of prior art.

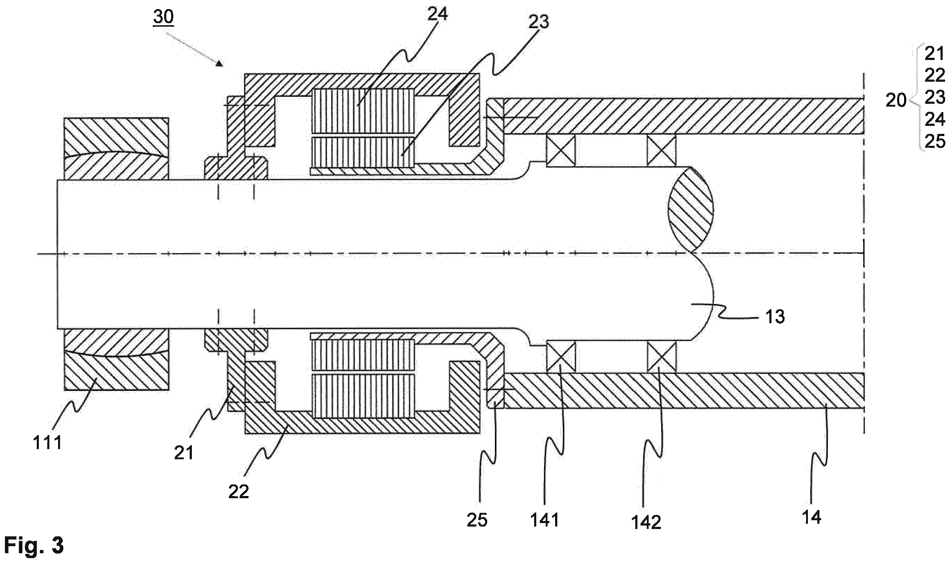

In Figures 3-5 are shown only the mechanical and electrical components, as cross-sectional views, of the drive end side ends of the curved roll 5 shown in Figure 2. The components of the electric motor 2 or 20 and of the roll 5 shown in Figures 3-5 are rotationally symmetrical around the longitudinal axis of the axle 13. The roll pipes, axles and bearings shown advantageously extend without changes to the maintenance side end of the roll.

The electric motors 2 or 20 according to the invention shown in Figures 2-5 are advantageously permanently magnetised synchronous machines. A permanent magnet motor is usually controlled by a frequency transformer. Due to the frequency transformer, the permanent magnet motor drive is speed controllable whereby the motor can be efficiently used according to the process conditions. The rotor of a permanently magnetised synchronous machine rotates at exactly the same speed as the magnetic field of the stator. Therefore there does not occur a slip disturbing the speed control that is typical for regular short circuit motors. The rotor of a permanently magnetised synchronous machine according to the invention that is frequency transformer controlled can be made to rotate at precisely such a speed, that the peripheral speed of the roll is equal to the speed of the paper web. In traditional belt driven drive solutions, the accuracy of the speed control is also disturbed by the typical intermittent slipping of the belts of the belt drive, whereby the true peripheral speed of the roll is difficult to control accurately in all drive situations, even if a separate sensor would be used for controlling the motor.

It is important, especially for the spreader rolls, that the peripheral speed of the spreader roll is exactly identical to the speed of the paper web. Even a small difference in speeds between the paper web and the peripheral speed of the roll causes the spreading efficiency to drop to a fraction. Therefore the function of the spreader roll has a great influence to the function, runnability, reliability of the paper machine and the coating machine and to the quality of the product.

The electrical circuits and cablings used in the electrical feed and rotation speed control of the motor are not shown in Figures 2-5.

The motor solutions shown in Figures 2-5 can be performed on the space reserved for the equipments 15, according to the state of the art, of existing rolls on the axle 13.

**Figure 2** shows how a drive solution 10 of a curved roll according to prior art, as shown in Figure 1, is replaceable by a drive solution 1 according to the invention. The curved roll 5 has a structure that is mainly identical than in the operation solution 10 according to the prior art. In the drive solution 1 according to the invention, the driving gear 15 of the belt drive required in Figure 1 is replaced by a direct drive electric motor 2. The direct drive motor 2 is advantageously a permanently magnetised synchronous motor. The direct drive motor 2 according to the invention can also be installed to such rolls in which drive solutions based on belt draw have previously been used. The direct drive electric motor 2 of Figure 2 is referenced by reference number 20 in Figures 3-5.

**Figure 3** shows a junction structure 30 between the electric motor 20 and the roll 5, according to a first embodiment of the invention. The curved axle 13 is attached on the drive side of the paper machine to the support structure of the machine via an articulation bearing 111. The rotatable roll pipe 14 is supported by bearings 141 and 142 to the curved axle 13. Similar bearings support the roll pipe 14 on the whole length of the roll pipe up to the maintenance side end. The bearings between the roll pipe 14 and the axle 13 are advantageously ceramic bearings, that have a small friction and are reliable.

The electric motor 20 comprises advantageously an end flange 21 of the stator, a support frame 22 of the stator, stator winding or, shorter, a stator 24, a rotor 23 and mechanical attachment means of the rotor that can advantageously be a pipe axle 25. The round end flange 21 of the stator is fixedly attached to the axle 13 close to the articulation bearing 111 through a round opening at the end flange. The support frame 22 of the stator is attached by mechanical attachment means to the end flange 21 of the stator, into which support frame the stator 24 itself is attached. In the cross-section of Figure 3, the support frame 22 of the stator shows above and below the axle 13 as a piece in the form of flat-bottomed U, to the bottom of which the stator 24 is attached. The end flange 21 of the stator is attached to the articulation bearing 111 side end of the support frame 22. At the roll pipe 14 side end of the support frame 22, the second arm of the U formed by the support frame 22 of the stator points towards the axle 13, without however extending up to the axle 13. Similarly, the support frame 22 of the stator does not extend up to the drive side end of the roll pipe 14, but there remains a space between the support frame 22 of the stator and the end of the roll pipe 14, from which space the rotor 23 is attached to the end of the roll pipe 14 by mechanical attachment means. In the cross-section of Figure 3, the attachment means used in the attachment of the rotor is advantageously a pipe axle 25 that can be seen as two L-shaped horizontal parts above and below the axle 13. The rotor 23 is attached to the drive side end of the pipe axle 25 of the rotor and the second end of the pipe axle 25 of the rotor, vertical in Figure 3, is attached to the roll pipe 14 by mechanical attachment means.

In the drive situation, the rotor 23 of the electric motor 20 rotates the roll pipe 14 by the speed defined by the control of the direct drive motor.

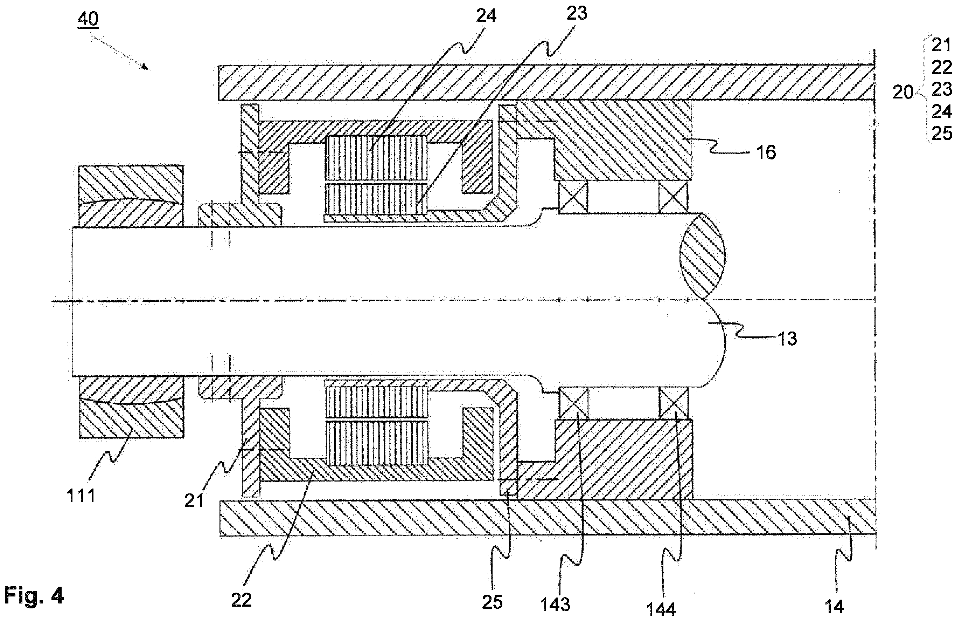

**Figure 4** shows a junction structure 40 between the electric motor 20 and the roll 5, according to a second embodiment of the invention. In this second embodiment, the direct drive motor 20 is installed at the drive side end of the roll pipe, at least partially inside the roll pipe 14.

As in the first embodiment, also in this embodiment the curved axle 13 is attached on the drive side of the paper machine to the support structure of the paper machine via an articulation bearing 111. The drive side end of the rotatable roll pipe 14 is supported by a sleeve 16 and bearings 143 and 144 to the curved axle 13. Behind the sleeve 16, the roll pipe 14 is supported on the rest of the length of the roll pipe up to the maintenance side end, advantageously by the bearing structure shown in Figure 3. Advantageously, the bearings between the roll pipe 14, the sleeve 16 and the axle 13 are ceramic bearings.

In one advantageous embodiment of the invention, the sleeve 16 and the bearing supported by it extends up to the maintenance side end of the roll pipe 14.

The electric motor 20 comprises advantageously an end flange 21 of the stator, a support frame 22 of the stator, a stator 24, a rotor 23 and mechanical attachment means of the rotor, for example a pipe axle 25. The advantageously round end flange 21 of the stator is fixedly attached to the axle 13 close to the articulation bearing 111 through a round opening at the end flange 21 of the stator by mechanical attachment means. The end flange 21 of the stator is, in this embodiment, inside the roll pipe 14, however it does not extend up to the inner surface of the roll pipe 14. The distance between the end flange 21 of the stator and the inner surface of the roll pipe 14 is advantageously so small, that no dirt can enter the electric motor 20.

In one advantageous embodiment, a resilient seal that extends up to the inner surface of the roll pipe 14 (no shown in Figure 4) is attached to the end flange 21 of the stator.

The support frame 22 of the stator is attached to the end flange 21 of the stator, into which support frame the stator 24 itself is attached. In the cross-section of Figure 4, the support frame 22 of the stator shows above and below the axle 13 as a piece in the form of flat-bottomed U, to the bottom of which U-shaped piece the stator 24 is attached. The end plate 21 of the stator is attached to the articulation bearing 111 side end of the support frame 22. At the roll pipe 14 side end of the support frame 22 of the stator, the second arm of the U formed by the support frame 22 of the stator points towards the axle 13 without however extending up to the axle 13.

In this embodiment, the support frame 22 of the stator is advantageously fully inside the roll pipe 14. There remains a space between the support frame 22 of the stator and the sleeve 16 supporting the roll pipe 14, which space is used for connecting the pipe axle 25 of the rotor that is advantageously attached to the rotor 23, to the sleeve 16 by mechanical attachment means. In the cross-section of Figure 4, the pipe axle 25 of the rotor is shown as two L-shaped horizontal parts above and below the axle 13. The rotor 23 is attached to the drive side end of the pipe axle 25 and the other end of the pipe axle, vertical in Figure 4, is attached to the sleeve 16 supporting the roll pipe 14.

In the drive situation, the rotor 23 of the electric motor 20 rotates the roll pipe 14 by the speed defined by the control of the motor.

**Figure 5** shows a junction structure 50 between the electric motor 20 and the roll 5, according to a third embodiment of the invention. In this embodiment, the direct drive motor 20 is installed at the drive side end of the roll pipe, mainly outside the roll pipe 14.

As in the first embodiment, also in this embodiment the curved axle 13 is attached on the drive side of the machine to the support structure of the paper machine via an articulation bearing 111. The rotatable roll pipe 14 is supported by bearings 145 and 146 to the curved axle 13. Similar bearings support the roll pipe 14 on the whole length of the roll pipe up to the maintenance side end. Advantageously, the bearings between the roll pipe 14 and the axle 13 are ceramic bearings.

The electric motor 20 comprises advantageously a round end flange 21 of the stator, a support frame 22 of the stator, a stator 24, a rotor 23 and mechanical attachment means of the rotor, for example a pipe axle 25 or a suitable screw attachment. The end flange 21 of the stator is fixedly attached to the axle 13 close to the articulation bearing 111. In this embodiment, the diameter of the round end flange 21 of the stator is larger than the outer diameter of the roll pipe 14.

The support frame 22 of the stator is attached to the end flange 21 of the stator, into which support frame the stator 24 itself is attached. In the cross-section of Figure 5, the support frame 22 of the stator shows above and below the axle 14 as a piece in the form of flat-bottomed U, to the bottom of which U-shaped piece the stator 24 is attached. However, the arm of the U-shaped piece on the side of the roll pipe 14 is advantageously longer than the arm of the U-shaped piece on the side of the end plate 21 of the stator. The end plate 21 of the stator is attached to the articulation bearing 111 side end of the support frame 22 of the stator. At the roll pipe 14 side end of the support frame 22 of the stator, the second arm of the U formed by the support frame 22 of the stator points towards the axle 13 without however extending up to the outer surface of the axle 14. The distance between the support frame 22 of the stator and the outer surface of the roll pipe 14 is advantageously so small, that no dirt can enter the electric motor 20.

In one advantageous embodiment, a resilient seal that extends up to the outer surface of the roll pipe 14 (no shown in Figure 4) is attached to the support frame 22 of the stator.

The rotor 23 is advantageously attached to the pipe axle 25a of the rotor. In the cross-section of Figure 5, the pipe axle 25a is shown as two partly L-shaped horizontal parts between the rotor 23 and the roll pipe 14. The rotor 23 is attached to the roll pipe 14 side end of the pipe axle 25a and the second end of the pipe axle 25a, vertical in Figure 5, is attached to the drive end side end of the roll pipe 14.

In one advantageous embodiment of the invention, the rotor 23 is attached, instead of the pipe axle, by its support structure to either the end or outer surface of the roll pipe 14 via for example screw joints.

In the drive situation, the rotor 23 of the electric motor 20 rotates the roll pipe 14 by the speed defined by the control of the motor.

The drive arrangement of a curved roll according to the invention has the following technical effects.

Spreader rolls and curved rolls require intermittent maintenance due to their structure. For maintenance, the roll needs to be detached from the machine and taken to maintenance. The direct drive motor is transported with the roll at all stages and the only installation work relating to the motor at the paper machine is attachment of the cables.

Furthermore, due to its structure, the direct drive motor according to the invention is easy to install on the roll and to dismount from the roll at the assembly plant of the roll or at the maintenance site of the roll.

The direct drive motor according to the invention does not require separate motor beds. This gives a special advantage when installing the roll to a new paper machine or adding a spreader roll to a new position at an existing paper machine. It is then sufficient to design and arrange the support of the roll.

The angle between curvature of the roll and the paper web is changed in the spreader rolls, depending of the type of the paper. In traditional belt driven spreader rolls the adjustment of the position of the curvature of the roll with respect to the paper web changes also the position of the belt roller, whereby it would also be necessary to adjust the belt drive when adjusting the position of the roll. The position of traditional belt driven motors is not necessarily adjusted, which leads to premature use of the belt. In the drive arrangement according to the invention, the direct drive motor according to the invention always has the correct drive position irrespective to the position into which the roll has been adjusted.

Above have been described some advantageous embodiments in connection to paper machine that are applicable to the curved roll according to the invention. The direct drive motor arrangement according to the invention can be used also in other machines that use curved rolls. The invention is not limited to the solutions described above, but the inventive idea can be applied in numerous ways within the scope of the claims.

## Claims

1. A drive arrangement (1) that comprises
- a uniform, dead, curved axle (13) of a roll (5)
- a roll pipe (14), that is configured to rotate around the dead axle (13) of the roll (5), supported by bearings (141-146);
- articulation bearings (11, 111) at both ends of the roll (5) for locking the dead axle (13) of the roll (5) to a frame structure supporting the roll and
- drive means of the roll (5), wherein the drive means of the roll (5) comprise a permanently magnetized synchronous direct drive electric motor (2, 20) mounted on the dead axle (13), which permanently magnetized synchronous direct drive electric motor (2, 20) comprises:
- a rotor (23) that is attached by mechanical attachment means (25, 25a) to the rotating roll pipe (14) of the roll (5), and
- the bearings (141-146) of the rotating roll pipe (14) of the roll (5) are configured to function also as the only bearings of the permanently magnetized synchronous direct drive motor (2, 30, 40, 50), **characterized in that** a support frame (22) of a stator (24) is attached via an end flange (21) of the stator to the dead axle (13) of the roll (5) between the articulation bearings (11, 111) and bearings (141-146) of a rotating roll pipe (14) of the roll (5).

2. The drive arrangement according to claim 1, **characterised in that** the permanently magnetized synchronous direct drive electric motor (2, 20) is attached between the articulation bearing (11, 111) of the drive end of the roll (5) and the rotating roll pipe (14).

3. The drive arrangement according to claim 2, **characterised in that** the rotor (23) of the permanently magnetized synchronous direct drive electric motor (2, 20) is attached by mechanical attachment means (25) to the end surface of the drive end side of the roll pipe (14).

4. The drive arrangement according to claim 2, **characterised in that** the rotor (23) of the permanently magnetized synchronous direct drive electrical motor (2, 20) is attached to a sleeve (16) inside the roll pipe (14) at the drive end side of the roll pipe (14) by mechanical attachment means (25), which sleeve is at its outer surface mechanically attached to the inner surface of the roll pipe (14) and at its lower surface mounted on a bearing (143, 144) to the axle (13).

5. The drive arrangement according to claim 2, **characterised in that** the rotor (23) of the permanently magnetized synchronous direct drive electric motor (2, 20) is attached by mechanical attachment means (25a) to the outer surface of the roll pipe (14) at the drive end side of the roll pipe (14).

6. The drive arrangement according to claim 3, 4 or 5, **characterised in that** the mechanical attachment means (25, 25a) are either a pipe axle or a screw coupling joining the support structure of the rotor and the roll pipe (14) together.

7. The drive arrangement according to claim 1, **characterised in that** the bearings (141-146) of the roll (5) are ceramic rolling bearings.

8. The drive arrangement according to claim 1, **characterised in that** the bearings (141-146) of the roll (5) are arranged to function also as bearings of the rotor (23) of the permanently magnetized synchronous direct drive motor.

9. The drive arrangement according to claim 1-8, **characterised in that** the roll (5) is a roll of a paper machine.

10. The drive arrangement according to anyone of claims 1, 2, 8 or 9, **characterised in that** the roll (5) is a curved roll comprising
- a uniform, curved axle (13) of the roll (5);
- a roll pipe (14), that is configured to rotate around the dead axle (13) of the curved roll, supported by bearings (141-146);
- sites for articulation bearings (11, 12, 111) at both ends of the dead axle (13) of the curved roll, and;
- drive means of the curved roll which comprises permanently magnetized synchronous direct drive electric motor (2, 20) comprising:
- a stator (24) that is attached by a support frame (22) of the stator to the dead axle (13) of the curved roll via an end flange (21) of the stator, which dead axle (13) is configured to be attached to a frame structure of a paper machine;
- a rotor (23) that is attached by mechanical attachment means (25, 25a) to the roll pipe (14), and;
- the bearings (141-146) of the curved roll are configured to function as the only bearing means of the permanently magnetized synchronous direct drive electric motor (2, 20).

11. The drive arrangement according to claim 9, **characterised in that** the roll (5) is a curved spreader roll of a paper machine.

## Patentansprüche

1. Eine Antriebsanordnung (1), welche umfasst
- eine einheitliche, stehende, gebogene Achse (13) einer Walze (5)
- ein Walzenrohr (14), welches derart konfiguriert ist, dass es sich um die stehende Achse (13) der Walze dreht, gestützt durch Lager (141-146);
- Gelenklager (11, 111) an beiden Enden der Walze (5), um die stehende Achse (13) der Walze (5) an einer Rahmenstruktur festzulegen, welche die Walze stütz, und
- Antriebsmittel der Walze (5),
- wobei die Antriebsmittel der Walze einen permanent magnetisierten synchronen Direktantriebselektromotor (2, 20) umfassen, welcher auf der stehenden Achse (13) montiert ist, wobei der permanent magnetisierte synchrone Direktantriebselektromotor (2, 20) umfasst
- einen Rotor (23), welcher durch mechanische Befestigungsmittel (25, 25a) an dem drehenden Walzenrohr (14) der Walze (5) befestigt ist, und
- die Lager (141-146) des drehenden Walzenrohrs (14) der Walze (5) derart konfiguriert sind, dass sie auch als sie einzigen Lager des permanent magnetisierten Direktantriebsmotors (2, 30, 40, 50) dienen,
**dadurch gekennzeichnet, dass** ein Halterahmen (22) von einem Stator (24) mittels eines Endflansches (21) des Stators an der stehenden Achse (13) der Walze (5) zwischen den Gelenklagern (11, 111) und Lagern (141-146) des sich drehenden Walzenrohrs (14) der Walze (5) befestigt ist.

2. Die Antriebsanordnung nach Anspruch 1, **dadurch gekennzeichnet, dass** der permanent magnetisierte synchrone Direktantriebselektromotor (2, 20) zwischen dem Gelenklager (11, 111) des Antriebsendes der Walze (5) und dem sich drehenden Walzenrohr (14) befestigt ist.

3. Die Antriebsanordnung nach Anspruch 2, **dadurch gekennzeichnet, dass** der Rotor (23) des permanent magnetisierten synchronen Direktantriebselektromotors (2, 20) durch mechanische Befestigungsmittel (25) an der Stirnfläche der Antriebsstirnseite des Walzenrohrs (14) befestigt ist.

4. Die Antriebsanordnung nach Anspruch 2, **dadurch gekennzeichnet, dass** der Rotor (23) des permanent magnetisierten synchronen Direktantriebselektromotors (2, 20) an einer Hülse (16) innerhalb des Walzenrohrs (14) an der Antriebsseite des Walzenrohrs (14) durch mechanische Befestigungsmittel (25) befestigt ist, wobei die Hülse mit ihrer äußeren Oberfläche mechanisch mit der inneren Oberfläche des Walzenrohrs (14) verbunden ist und mit ihrer unteren Oberfläche auf einem Lager (143, 144) zu der Achse (13) montiert ist.

5. Die Antriebsanordnung nach Anspruch 2, **dadurch gekennzeichnet, dass** der Rotor (23) des permanent magnetisierten synchronen Direktantriebselektromotors (2, 20) durch mechanische Befestigungsmittel (25a) an der äußeren Oberfläche des Walzenrohrs (14) an der Antriebsseite des Walzenrohrs (14) befestigt ist.

6. Die Antriebsanordnung nach Anspruch 3, 4 oder 5, **dadurch gekennzeichnet, dass** die mechanischen Befestigungsmittel (25, 25a) entweder eine Rohrachse sind oder eine Schraubverbindung, welche die Haltestruktur des Rotors und das Walzenrohr (14) verbindet.

7. Die Antriebsanordnung nach Anspruch 1, **dadurch gekennzeichnet, dass** die Lager (141-146) der Walze (5) keramische Wälzlager sind.

8. Die Antriebsanordnung nach Anspruch 1, **dadurch gekennzeichnet, dass** die Lager (141-146) der Walze (5) derart angeordnet sind, dass sie auch als Lager des Rotors (23) des permanent magnetisierten synchronen Direktantriebselektromotors (2, 20) fungieren.

9. Die Antriebsanordnung nach Anspruch 1-8, **dadurch gekennzeichnet, dass** die Walze (5) die Walze einer Papiermaschine ist.

10. Die Antriebsanordnung nach einem der Ansprüche 1, 2, 8 oder 9, **dadurch gekennzeichnet, dass** die Walze (5) eine gekrümmte Walze ist umfassend
- eine einheitliche gebogene Achse (13) der Walze (5);
- ein Walzenrohr (14), welches derart ausgestaltet ist, dass es sich um die stehende Achse (13) der gekrümmten Walze (5) dreht, gestützt von Lagern (141-146);
- Gelenklagersitze (11, 12, 111) an beiden Enden der stehenden Achse (13) der gekrümmten Walze, und;
- Antriebsmittel der gekrümmten Walze, welche einen permanent magnetisierten synchronen Direktantriebselektromotor (2, 20) umfassen, umfassend:
- einen Stator (24), welcher durch einen Halterahmen (22) des Stators an der stehenden Achse (13) der gekrümmten Walze befestigt ist mittels eines Endflansches (21) des Stators, wobei die stehende Achse derart ausgestaltet ist, dass sie an einer Rahmenstruktur von einer Papiermaschine befestigt wird;
- einen Rotor (23), welcher durch mechanische Befestigungsmittel (25, 25a) an dem Walzenrohr (14) befestigt ist, und;
- die Lager (141-146) der gekrümmten Walze sind derart ausgestaltet, dass sie als einzige Lagermittel des permanent magnetisierten synchronen Direktantriebselektromotors (2, 20) fungieren.

11. Die Antriebsanordnung nach Anspruch 9, **dadurch gekennzeichnet, dass** die Walze (5) eine gekrümmte Breitstreckwalze von einer Papiermaschine ist.

## Revendications

1. Agencement d'entraînement (1) qui comprend :
un essieu incurvé, auxiliaire, uniforme (13) d'un cylindre (5),
un tube de cylindre (14) qui est configuré pour tourner autour de l'essieu auxiliaire (13) du cylindre (5), supporté par des paliers (141-146) ;
des paliers d'articulation (11, 111) aux deux extrémités du cylindre (5) pour bloquer l'essieu auxiliaire (13) du cylindre (5) sur une structure de bâti supportant le cylindre, et
des moyens d'entraînement du cylindre (5),
dans lequel les moyens d'entraînement du cylindre (5) comprennent un moteur électrique à entraînement direct synchrone à aimant permanent (2, 20) monté sur l'essieu auxiliaire (13), lequel moteur électrique à entraînement direct synchrone à aimant permanent (2, 20) comprend :
un rotor (23) qui est fixé par des moyens de fixation mécanique (25, 25a) au tube de cylindre (14) rotatif du cylindre (5), et
les paliers (141-146) du tube de cylindre (14) rotatif du cylindre (5) sont configurés pour servir également de paliers uniques du moteur à entraînement direct synchrone à aimant permanent (2, 30, 40, 50), **caractérisé en ce qu'**un bâti de support (22) d'un stator (24) est fixé via une bride d'extrémité (21) du stator à l'essieu auxiliaire (13) du cylindre (5) entre les paliers d'articulation (11, 111) et les paliers (141-146) d'un tube de cylindre (14) rotatif du cylindre (5).

2. Agencement d'entraînement selon la revendication 1, **caractérisé en ce que** le moteur électrique à entraînement direct synchrone à aimant permanent (2, 20) est fixé entre le palier d'articulation (11, 111) de l'extrémité d'entraînement du cylindre (5) et le tube de cylindre (14) rotatif.

3. Agencement d'entraînement selon la revendication 2, **caractérisé en ce que** le rotor (23) du moteur électrique à entraînement direct synchrone à aimant permanent (2, 20) est fixé par des moyens de fixation mécanique (25) à la surface d'extrémité du côté de l'extrémité d'entraînement du tube de cylindre (14).

4. Agencement d'entraînement selon la revendication 2, **caractérisé en ce que** le rotor (23) du moteur électrique à entraînement direct synchrone à aimant permanent (2, 20) est fixé à un manchon (16) à l'intérieur du tube de cylindre (14) du côté de l'extrémité d'entraînement du tube de cylindre (14) par des moyens de fixation mécanique (25), lequel manchon est, au niveau de sa surface externe, fixé sur la surface interne du tube de cylindre (14) et au niveau de sa surface inférieure, monté sur un palier (143, 144), à l'essieu (13).

5. Agencement d'entraînement selon la revendication 2, **caractérisé en ce que** le rotor (23) du moteur électrique à entraînement direct synchrone à aimant permanent (2, 20) est fixé, par des moyens de fixation mécanique (25a), à la surface externe du tube de cylindre (14), du côté de l'extrémité d'entraînement du tube de cylindre (14).

6. Agencement d'entraînement selon la revendication 3, 4 ou 5, **caractérisé en ce que** les moyens de fixation mécanique (25, 25a) sont un essieu de tube ou un couplage de vis assemblant la structure de support du rotor et le tube de cylindre (14).

7. Agencement d'entraînement selon la revendication 1, **caractérisé en ce que** les paliers (141-146) du cylindre (5) sont des paliers à roulement en céramique.

8. Agencement d'entraînement selon la revendication 1, **caractérisé en ce que** les paliers (141-146) du cylindre (5) sont agencés pour servir de paliers du rotor (23) du moteur à entraînement direct synchrone à aimant permanent.

9. Agencement d'entraînement selon la revendication 1 à 8, **caractérisé en ce que** le cylindre (5) est un cylindre d'une machine à papier.

10. Agencement d'entrainement selon l'une quelconque des revendications 1, 2, 8 ou 9, **caractérisé en ce que** le cylindre (5) est un cylindre incurvé comprenant :
un essieu incurvé uniforme (13) du cylindre (5) ;
un tube de cylindre (14) qui est configuré pour tourner autour de l'essieu auxiliaire (13) du cylindre incurvé, supporté par les paliers (141-146) ;
des sites pour les paliers d'articulation (11, 12, 111) aux deux extrémités de l'essieu auxiliaire (13) du cylindre incurvé ; et
des moyens d'entraînement du cylindre incurvé qui comprend le moteur électrique à entraînement direct synchrone à aimant permanent (2, 20), comprenant :
un stator (24) qui est fixé par un bâti de support (22) du stator à l'essieu auxiliaire (13) du cylindre incurvé via une bride d'extrémité (21) du stator, lequel essieu auxiliaire (13) est configuré pour être fixé à une structure de bâti d'une machine à papier ;
un rotor (23) qui est fixé par les moyens de fixation mécanique (25, 25a) sur le tube de cylindre (14) ; et
les paliers (141-146) du cylindre incurvé sont configurés pour servir de moyens de palier uniques du moteur électrique à entraînement direct synchrone à aimant permanent (2, 20).

11. Agencement d'entraînement selon la revendication 9, **caractérisé en ce que** le cylindre (5) est un cylindre déplisseur d'une machine à papier.
